Europäisches Patentamt

European Patent Office

Office européen des brevets

(19)

(11) Veröffentlichungsnummer: **0 438 030 A1**

# EUROPÄISCHE PATENTANMELDUNG

(21) Anmeldenummer: 90810919.2

(51) Int. Cl.⁵: **B25J 19/00**, B25J 15/02

(22) Anmeldetag: 27.11.90

(30) Priorität: **17.01.90 CH 147/90**

(43) Veröffentlichungstag der Anmeldung:
**24.07.91 Patentblatt 91/30**

(84) Benannte Vertragsstaaten:
**CH DE DK FR GB IT LI NL SE**

(71) Anmelder: **GEBRÜDER SULZER AKTIENGESELLSCHAFT**
**Zürcherstrasse 9**
**CH-8401 Winterthur(CH)**

(72) Erfinder: **Servis, Wilhelm**
**Gutstrasse 51**
**CH-8400 Winterthur(CH)**

(54) Greifergehäuse für im Reinraum eingesetzten Roboter.

(57) Das Gehäuse (1) zur Greifervorrichtung eines Roboters umhüllt den Antrieb (4) von beweglichen Greiforganen (3). Es besteht eine freie Verbindung zwischen Gehäuseinneren und Arbeitsfeld des Roboters nur in Form schlitzförmiger Oeffnungen (7,7') in der Gehäusewand (8). Mit einer Saugvorrichtung lässt sich im Gehäuse (1) ein Unterdruck erzeugen, der verhindern soll, dass Abriebpartikelchen aus dem Gehäuseinneren ins Arbeitsfeld gelangen. Ein Roboter mit einem Gehäuse (1) zur Greifervorrichtung eignet sich gut zur Handhabung dünner Platten in extrem staubfreien Reinräumen.

Fig.1

EP 0 438 030 A1

## GREIFERGEHÄUSE FÜR IM REINRAUM EINGESETZTEN ROBOTER

Die Erfindung betrifft ein Gehäuse gemäss Oberbegriff des Anspruchs 1, eine Greifervorrichtung mit einem solchen Gehäuse, ein Verfahren zur Betätigung und eine Verwendung einer solchen Greifervorrichtung sowie einen Bewegungsautomaten, insbesondere einen Roboter, der eine solche Greifervorrichtung aufweist.

Bewegungsautomaten, insbesondere Roboter, werden bevorzugt für Tätigkeiten eingesetzt, die für den Menschen unangenehm, gesundheitsschädlich oder lebensgefährlich sind, die durch den Menschen nicht mit der nötigen gleichbleibenden Zuverlässigkeit ausgeführt werden können und/oder bei denen die Anwesenheit des Menschen stört. So trifft bei der Herstellung der Mikrostrukturen in der Halbleiterindustrie, die in staubarmen Reinräumen ausgeführt werden müssen, besonders der dritte der erwähnten Gründe für die Verwendung von Robotern zu. Denn der Mensch macht sich als Quelle staubförmiger Verunreinigung bemerkbar. Durch Schutzanzüge - die zu tragen nicht angenehm ist - lässt sich dieses Problem bis zu einem gewissen Grade entschärfen, und in vielen Fällen ist dies auch die angezeigte Lösung des Problems. Aber bei Routinearbeiten, die für den Menschen eintönig und daher nur mit Mühe zuverlässig ausgübt werden können, ist der Einsatz von Robotern sehr willkommen. Jedoch auch der Roboter ist eine staubabgebende Quelle. Beispielsweise bei der Betätigung der als Greifer dienenden Roboterwerkzeuge werden wegen Abriebes mikroskopisch feine Staubpartikelchen in den Arbeitsbereich freigesetzt, die sich bei der Herstellung der Mikrostrukturen schädlich auswirken und deren schädlichen Folgen mit speziellen Massnahmen behoben werden müssen.

Aus der EP-A-0 272 205 ist ein Werkzeug für Roboter bekannt, das unter anderm in der Reinraumtechnik eingesetzt werden kann. In diesem als Greifer verwendeten Werkzeug sind bei einer besondern Ausführungsform Kanäle vorgesehen, durch die ein Kühlmedium wie beispielsweise Luft geleitet werden kann. Diese Kanäle können auch zum Absaugen von störenden und schädlichen Stoffen verwendet werden. Weil die Absaugung nur lokal erfolgt, genügen bei extrem staubfreien Reinräumen (mit einem Teilchen pro Liter bei einer Teilchengrösse < 0,5 Mikrometer) solche Absaugkanäle nicht, das Arbeitsfeld des Werkzeugs ausreichend von Partikelchen, insbesondere solchen, die das Werkzeug selbst abgibt, frei zu halten.

Es ist Aufgabe der Erfindung, ein Mittel zu schaffen, durch das die Freisetzung von Abriebpartikelchen in das Arbeitsfeld verhindert oder zumindest eingeschränkt werden kann.

Die Lösung der Aufgabe wird durch ein Gehäuse herbeigeführt, das die im Kennzeichen des Anspruchs 1 angegeben Merkmale aufweist. Durch die Absaugvorrichtung kann im Gehäuse ein Unterdruck von beispielsweise einem Millibar erzeugt werden. Dank dieses Unterdrucks strömt durch die Schlitze in der Gehäusewand, die für die Schwenkbewegung oder lineare Verschiebung von Greiforganen vorhanden sein müssen, immer Luft in das Gehäuseinnere. Dadurch wird verhindert, dass Staubpartikel, die bei der Bewegung der Greiforganen und des Antriebsmotors entstehen, in den Arbeitsbereich austreten können.

Material und Geometrie des Gehäuses sollten solcherart sein, dass die Oberfläche gut mit einer Reinigungsflüssigkeit, beispielsweise einer Aethanollösung, der noch Tenside beigefügt sein können, gewaschen werden kann. Das Material soll eine möglichst glatte Oberfläche haben und es soll nichtrostend sein. Als Material kann beispielsweise eloxiertes Aluminium verwendet werden. Die Geometrie der äussern Oberfläche sollte möglichst wenige oder keine konkaven Stellen aufweisen, da Vertiefung schwer zu reinigen sind.

Vorteilhafte Ausführungsformen des erfindungsgemässen Gehäuses werden in den abhängigen Ansprüchen 2 bis 8 näher gekennzeichnet. Die unabhängigen Ansprüchen 9 bis 12 betreffen eine Greifervorrichtung mit dem erfindungsgemässen Gehäuse, ein Verfahren zur Betätigung einer solchen Greifervorrichtung, die Verwendung der erfindungsgemässen Vorrichtung im Reinraum und schliesslich einen Bewegungsautomaten, der mit dem erfindungsgemässen Greifer ausgerüstet ist. Ein solcher Bewegungsautomat kann mit Vorteil in extrem staubfreien Reinräumen für die Handhabung von dünnen, zerbrechlichen Platten eingesetzt werden.

Im folgenden wird die Erfindung anhand der Zeichnung, die ein Ausführungsbeispiel darstellt, näher erläutert.

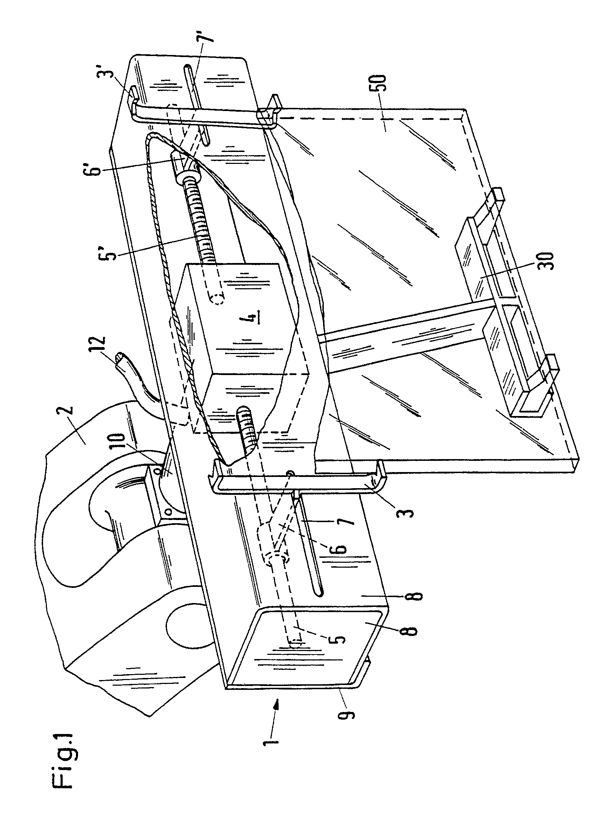

Fig. 1     zeigt in perspektivischer Ansicht den Greifer eines Roboters mit dem erfindungsgemässen Gehäuse.

Das Gehäuse 1 der Greifervorrichtung ist am Roboterarm 2 befestigt. Mit zwei linear beweglichen Greiforganen 3, 3', die zusammen und gegenläufig bewegbar sind, lässt sich das Werkstück 50, hier als dünne Glasplatte dargestellt, seitlich festhalten. Ein Antriebsmotor 4, beispielsweise ein Schrittmotor, mit zwei gemeinsam drehbaren Gewindestangen 5, 5', bewegt über die Verbindungsteile 6, 6' die beiden Greiforgane 3, 3'. Das Gehäuse 1, das die Form eines langgestreckten Rohres mit rechteckigem Querschnitt hat, weist in der vordern Seitenfläche zwei schlitzförmige öffnungen 7, 7' auf, durch die die Verbindungsteile 6, 6' zu den Greiforganen 3, 3' führen.

Mit Vorteil wird das Gehäuse 1 aus zwei oder mehr Teilen 8, 9 zusammengefügt, die beispielsweise zusammengeschraubt oder durch Schnappverschlüsse verbunden werden. Diese Gehäuseteile sollten ziemlich exakt gefertigt werden, so dass an den Stossstellen nur kleine Ritzen offen bleiben. Je kleiner diese Ritzen sind, desto geringer ist die Luftmenge, die durch die Saugvorrichtung gefördert werden muss, um den nötigen Unterdruck im Gehäuseinnern herzustellen.

Neben den beiden beweglichen Greiforganen 3 und 3' dient ein unbewegliches Greiforgan 30, das am Boden des Gehäuses 1 angebracht ist, als Träger für das Werkstück 50. Mit der Halterung 10 ist die Greifervorrichtung mit dem Roboterarm 2 verbunden. An dieser Halterung 10 sind die Anschlüsse für Energiespeisung, Steuerung und Luftabsaugung vorgesehen. In Fig. 1 ist nur die Anschlussleitung 12 zur Saugvorrichtung gezeigt.

Gehäuse nach der Erfindung sind natürlich auch für andere Greifervorrichtungen möglich, die mehrere, voneinander unabhängig bewegbare Greiforgane aufweisen. Die Erfindung bezieht sich selbstverständlich auch auf Greifervorrichtungen, die mehr als die im beschriebenen Ausführungsbeispiel auftretenden Freiheitsgrade bezüglich der Anzahl der Greiforgane aufweist. Ebenso gilt dies, wenn nur ein einziges bewegliches Greiforgan vorhanden ist. Das Gehäuse kann auch eine andere Form aufweisen: ein langgestrecktes rundes Rohr oder ein kurzer Zylinder, bei dem die beweglichen Greiforgane durch die ebene Grundfläche austreten. Statt einer linearen Bewegung können die Greiforgane auch eine kurvenförmige Bewegung ausführen.

## Patentansprüche

1. Gehäuse (1) zu einer Greifervorrichtung für einen Bewegungsautomaten, insbesondere einen Roboter, mit mindestens einem bewegbaren Greiforgan (3) und mindestens einem Antrieb (4) dazu, dadurch **gekennzeichnet,** dass das Greiforgan (3) ausserhalb des Gehäuses (1) angeordnet ist und der Verbindungsteil (6) zwischen Antrieb (4) und Greiforgan (3) durch eine schlitzförmige Oeffnung (7) der Gehäusewand (8) führt und dass das Gehäuseinnere einen Anschluss (12) an eine Saugvorrichtung aufweist.

2. Gehäuse (1) nach Anspruch 1, dadurch gekennzeichnet, dass die Gehäusewand (8,9) aus mindestens zwei Teilen besteht, die trennbar miteinander verbunden sind.

3. Gehäuse (1) nach Anspruch 2, dadurch gekennzeichnet, dass an den Stosstellen zwischen den Teilen der Gehäusewand (8,9) ritzenartige Oeffnungen auftreten, deren gesamte Querschnittsfläche kleiner als ein Zehntel der Querschnittsfläche der Schlitze (7) für die Greiforgane (3) ist.

4. Gehäuse (1) nach einem der Ansprüche 1 bis 3, dadurch gekennzeichnet, dass die äussere Oberfläche mit einer Reinigungsflüssigkeit, insbesondere mit einer wässerigen Aethanollösung, waschbar ist.

5. Gehäuse (1) nach einem der Ansprüche 1 bis 4, dadurch gekennzeichnet, dass es aus nichtrostendem Metall, insbesondere eloxiertem Aluminium, besteht.

6. Gehäuse (1) nach einem der Ansprüche 1 bis 5, dadurch gekennzeichnet, dass seine Form im wesentlichen die eines langgestreckten Rohres mit geschlossenen Enden ist und dass die Schlitze (7) für die Greiforgane (3) sich auf einer Seitenfläche in Längsrichtung befinden.

7. Gehäuse (1) nach einem der Ansprüche 1 bis 6, dadurch gekennzeichnet, dass an ihm mindestens ein unbewegliches Greiforgan (30) als Träger für ein Werkstück befestigt ist.

8. Gehäuse (1) nach einem der Ansprüche 1 bis 7, dadurch gekennzeichnet, dass zwei Schlitze (7,7') für ein Paar von gegenläufig sich bewegenden Greiforganen (3,3') für die seitliche Fixierung eines Werkstücks (50) vorhanden sind.

9. Greifervorrichtung mit einem Gehäuse (1) nach einem der Ansprüche 1 bis 8.

10. Verfahren zur Betätigung einer Greifervorrichtung nach Anspruch 9, dadurch gekennzeichnet, dass durch Luftabsaugung im Gehäuse ein Unterdruck erzeugt wird.

11. Verwendung einer Greifervorrichtung nach Anspruch 9 in einem Reinraum.

12. Bewegungsautomat, insbesondere Roboter, mit einer Greifervorrichtung nach Anspruch 9.

13. Bewegungsautomat nach Anspruch 12 zur Handhabung dünner Platten (50).

Fig.1

EP 0 438 030 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 216 251   (SHIMIZU CONSTRUCTION)<br>* Seite 5, Zeile 3 - Seite 7, Zeile 8 *<br>- - - | 1,2,5,6 | B<br>25 J 19/00<br>B 25 J 15/02 |
| D,Y | EP-A-0 272 205   (BEBRUDER SULZER)<br>* Spalte 4, Zeile 52 - Spalte 5, Zeile 10 *<br>- - - | 1,2,5,6 | |
| A | GB-A-2 198 413   (SHIMIZU CONSTRUCTION)<br>* Seite 21, Zeile 11 - Seite 22, Zeile 24 *<br>- - - | 1,6 | |
| A | DE-A-1 906 310   (CENTRAL RESEARCH LABORATORIES)<br>* Seite 8, Zeile 20 - Seite 9, Zeile 7 *<br>- - - - - | 1 | |
| | | | **RECHERCHIERTE SACHGEBIETE (Int. Cl.5)**<br><br>B 25 J<br>H 01 L |

Der vorliegende Recherchenbericht wurde für alle Patentansprüche erstellt

| Recherchenort | Abschlußdatum der Recherche | Prüfer |
|---|---|---|
| Den Haag | 04 April 91 | LAMMINEUR P.C.G. |